# EUROPEAN PATENT APPLICATION

(11) **EP 1 892 567 A1**
(43) Date of publication of application: **27.02.2008**
(21) Application number: 07110090.3
(22) Date of filing: 12.06.2007
(51) Int. Cl.: G03B 7/00

(54) **Iris unit, and image projecting apparatus and display apparatus having the same**

(30) Priority: 23.08.2006 KR 20060080130
(71) Applicant: Samsung Electronics Co., Ltd., Seoul 442-742 (KR)
(72) Inventor: Kim, Hak-young, Yeongtong-gu, Suwon-si, Gyeonggi-do (KR); Song, Ki-beom, Suwon-si, Gyeonggi-do (KR); Kang, Byung-jo, Yeongtong-gu, Suwon-si, Gyeonggi-do (KR)
(74) Representative: Robinson, Ian Michael

(57) **Abstract**

A display apparatus, includes: a tube part (126,135); and an iris unit (140) comprising a main disk body (145) accommodated in the tube part (126,135) and comprising a main opening (147) formed in a light path, a shutter member (149) rotatably coupled with respect to the main disk body (145) to open and close the main opening (147), and a driving part (150) generating an electromagnetic force to rotate the shutter member (149).

## Description

Apparatuses consistent with the present invention relate to an iris unit, and an image projecting apparatus and a display apparatus having the same.

Generally, a display apparatus displaying an image on a screen includes a television, a projector, etc. The display apparatus includes an image projecting apparatus including a light source part and a display element converting light emitted from the light source part into an image. The display apparatus enlarges and projects the image formed by the image projecting apparatus on a screen. Various types of display apparatuses have been provided according to a display type and a view type.

By the display type, the display apparatus may be classified into a digital light processing (DLP) type, a plasma panel display (PDP) type, etc. The DLP type uses a digital micro-mirror device (DMD) determining whether to intercept light reflected on a surface thereof or not by a circuit board. The PDP type uses an electric discharge of gas.

By the view type, the display apparatus may be classified into a direct view image display device in which a user directly views an image display apparatus, and a projection type image display device in which a user indirectly views a projected image.

A projector, a kind of the projection type image display apparatus, includes an optical part including a display element such as a DMD, etc., and a light source supplying light to the optical part, and enlarges and projects an image formed by the display element on a screen. The projector may be classified into a single plate type having a single display, and a three plate type having three displays.

Korean Patent First Publication No. 2006-59268 discloses a conventional display device including an iris unit. The iris unit includes a stationary iris, a shutter member and a driving part, and is disposed between lenses. The shutter member is movably disposed to be adjacent to an opening part of the stationary iris to regulate the amount of light transmitted through the opening part. The driving part employs a voice coil motor (VCM) moving the shutter member by means of a magnetic force. The VCM is coupled to the shutter member, and includes a movable member rotatable in a case, and a magnet surrounding the movable member without contact. The movable member is wound with a coil.

With the configuration, the conventional iris unit controls brightness ratio by collecting light emitted from the light source, and regulating the amount of light projected on the screen. Here, the brightness ratio is the ratio of a maximum brightness value of a white area to a minimum brightness value of a black area.

However, in the conventional iris unit, since the driving part is coupled to an outer part of the case, interference among components occurs, and an assembling configuration becomes complicated. Accordingly, the conventional iris unit becomes difficult to be applied to a narrow space, and raises a manufacturing cost. Also, since the conventional iris unit uses the VCM, a kind of a step motor, noises occur, a response speed is low, and it is difficult to transform a step shift for controlling the brightness ratio. Accordingly, it is difficult to uniformly maintain reliability of the product.

According to the present invention there is provided apparatus as set forth in the appended claims. Preferred features of the invention will be apparent from the dependent claims, and the description which follows.

It is an aspect of the present invention to provide an iris unit simplifying a configuration to be slimmed, improving a brightness control ratio, and improving an economical efficiency and reliability of the product, and an image projecting apparatus and a display apparatus having the same.

The foregoing and/or other aspects of the present invention can be achieved by providing a display apparatus, comprising: a tube part; and an iris unit comprising a main disk body which is accommodated in the tube part and the main disk body comprising a main opening formed in a light path, a shutter member rotatably coupled with respect to the main disk body to open and close the main opening, and a driving part which generates an electromagnetic force to rotate the shutter member.

According to the exemplary embodiment of the present invention, the driving part may comprise: a first coil which is coupled to a first side of the shutter member, and receives power so that current flows therethrough, and a first main magnet which is coupled to the main disk body in a rotating direction of the first coil.

According to the exemplary embodiment of the present invention, the iris unit may further comprise: a first bracket which is provided to a first side of the main opening to rotatably support the shutter member with respect to the main disk body, and a second bracket which is provided to a second side of the main opening and coupled to the main disk body to guide rotation of the first coil.

According to the exemplary embodiment of the present invention, the iris unit may further comprise a hinge part which is provided between the first bracket and the main disk body to rotatably support the shutter member.

According to the exemplary embodiment of the present invention, the shutter member may rotate between an opening position in which the shutter member opens the main opening, and a closing position in which the shutter member closes the main opening, and the display apparatus further comprises an elastic member which is coupled to the hinge part to elastically press the shutter member toward the opening position.

According to the exemplary embodiment of the present invention, the iris unit may further comprise a sensor magnet which is coupled to an area of the shutter member, and a magnetic sensor which senses a magnetic flux variation of the sensor magnet according to rotation of the shutter member.

According to the exemplary embodiment of the present invention, the iris unit may further comprise a sub board which drives the magnetic sensor and the driving part.

According to the exemplary embodiment of the present invention, the iris unit may further comprise: a signal line which is electrically connected with the sub board through a signal line opening formed to the tube part, and a driving board which is provided to an outside of the tube part to be electrically connected with the sub board by the signal line.

According to the exemplary embodiment of the present invention, the first coil may comprise a first coil through part which is formed in a central part of the first coil, and the second bracket is accommodated in the first coil through part to guide rotation of the shutter member.

According to the exemplary embodiment of the present invention, the iris unit may further comprise a stopper which is provided to opposite sides of the second bracket to restrict rotation of the shutter member when the shutter member opens and closes the main opening.

According to the exemplary embodiment of the present invention, the stopper may be coupled to the main disk body to support the second bracket.

According to the exemplary embodiment of the present invention, the display apparatus may further comprise a sub disk body which is accommodated in the tube part to face the main disk body to interpose the shutter member therebetween, and a first sub magnet which faces the first main magnet to interpose the first coil therebetween.

According to the exemplary embodiment of the present invention, the driving part may comprise: a second coil which is coupled to a second side of the shutter member to face the first coil, and receives power so that current flows therethrough, and a second main magnet which is coupled to the main disk body in a rotating direction of the second coil.

According to the exemplary embodiment of the present invention, the display apparatus may further comprise a sub disk body which is accommodated in the tube part to face the main disk body to interpose the shutter member therebetween, wherein at least one of a first sub magnet which is coupled to the sub disk body in a rotating direction of the first coil to supply an electromagnetic force to the first coil, and a second sub magnet which is coupled to the sub disk body to face the second main magnet to interpose the second coil therebetween is coupled to the sub disk body.

According to the exemplary embodiment of the present invention, the second coil may comprise a second coil through part formed in a central part of the second coil, and the second bracket is inserted in the second coil through part to guide rotation of the shutter member.

According to the exemplary embodiment of the present invention, the display apparatus may further comprise a light source part, an illuminating part which collects light emitted from the light source part, a display element which forms an image out of light transmitted through the illuminating part, and a projecting part which projects the image formed by the display element on a screen, wherein the tube part comprises a collecting tube part which is provided to the illuminating part, and a projecting tube part which is provided to the projecting part.

According to the exemplary embodiment of the present invention, the main disk body may be accommodated in at least one of the collecting tube part and the projecting tube part.

The foregoing and/or other aspects of the present invention can be achieved by providing an image projecting apparatus, comprising: a tube part; and an iris unit comprising a main disk body which is accommodated in the tube part and the main disk body comprising a main opening formed in a light path, a shutter member which is rotatably coupled with respect to the main disk body to open and close the main opening, and a driving part which generates an electromagnetic force to rotate the shutter member.

According to the exemplary embodiment of the present invention, the driving part may comprise: a first coil which is coupled to a first side of the shutter member, and receives power so that current flows therethrough, and a first main magnet which is coupled to the main disk body in a rotating direction of the first coil.

According to the exemplary embodiment of the present invention, the iris unit may further comprise: a sensor magnet which is coupled to an area of the shutter member, a magnetic sensor which senses a magnetic flux variation of the sensor magnet according to rotation of the shutter member, and a sub board which drives the magnetic sensor and the driving part.

According to the exemplary embodiment of the present invention, the image projecting apparatus may further comprise a sub disk body which is accommodated in the tube part to face the main disk body to interpose the shutter member therebetween, and comprising a first sub magnet which faces the first main magnet to interpose the first coil therebetween.

According to the exemplary embodiment of the present invention, the driving part may comprise: a second coil which is coupled to a second side of the shutter member to face the first coil, and receives power so that current flows therethrough, and a second main magnet which is coupled to the main disk body in a rotating direction of the second coil.

According to the exemplary embodiment of the present invention, the image projecting apparatus may further comprise a sub disk body which is accommodated in the tube part to face the main disk body to interpose the shutter member therebetween, wherein at least one of a first sub magnet which is coupled to the sub disk body in a rotating direction of the first coil to supply an electromagnetic force to the first coil, and a second sub magnet coupled to the sub disk body to face the second main magnet to interpose the second coil therebetween is coupled to the sub disk body.

The foregoing and/or other aspects of the present invention can be achieved by providing an iris unit for a display apparatus comprising a tube part, comprising: a main disk body which is accommodated in the tube part, and the main disk body comprising a main opening formed in a light path; a shutter member which is rotatably coupled with respect to the main disk body to open and close an opening of the main disk body; and a driving part which generates an electromagnetic force to rotate the shutter member.

According to the exemplary embodiment of the present invention, the driving part may comprise: a first coil which is coupled to a first side of the shutter member, and receives power so that current flows therethrough, and a first main magnet which is coupled to the main disk body in a rotating direction of the first coil.

According to the exemplary embodiment of the present invention, the iris unit may further comprise a first bracket which is provided to a first side of the main opening to rotatably support the shutter member with respect to the main disk body, a second bracket which is provided to a second side of the main opening and coupled to the main disk body to guide rotation of the first coil, and a hinge part which is provided between the first bracket and the main disk body to rotatably support the shutter member, wherein the shutter member rotates between an opening position in which the shutter member opens the main opening, and a closing position in which the shutter member closes the main opening.

According to the exemplary embodiment of the present invention, the iris unit may further comprise: a sensor magnet which is coupled to an area of the shutter member, a magnetic sensor which senses a magnetic flux variation of the sensor magnet according to rotation of the shutter member, and a sub board which drives the magnetic sensor and the driving part.

According to the exemplary embodiment of the present invention, the iris unit may further comprise a sub disk body which is accommodated in the tube part to face the main disk body to interpose the shutter member therebetween, and a first sub magnet which faces the first main magnet to interpose the first coil therebetween.

According to the exemplary embodiment of the present invention, the driving part may further comprise: a second coil which is coupled to a second side of the shutter member to face the first coil, and receives power so that current flows therethrough, and a second main magnet which is coupled to the main disk body in a rotating direction of the second coil.

According to the exemplary embodiment of the present invention, the iris unit may further comprise a sub disk body which is accommodated in the tube part to face the main disk body to interpose the shutter member therebetween, wherein at least one of a first sub magnet which is coupled to the sub disk body in a rotating direction of the first coil to supply an electromagnetic force to the first coil, and a second sub magnet which is coupled to the sub disk body to face the second main magnet to interpose the second coil therebetween is coupled to the sub disk body.

The above and/or other aspects of the present invention will become apparent and more readily appreciated from the following description of the exemplary embodiments, taken in conjunction with the accompanying drawings, in which:
Figure 1 is a partial sectional perspective view illustrating an image projecting apparatus mounted with an optical engine set according to a first exemplary embodiment of the present invention;
Figure 2 is a schematic view of the optical engine set in Figure 1;
Figure 3 is an exploded perspective view according to the first exemplary embodiment of the present invention;
Figure 4 is a sectional view of a main part in Figure 3;
Figures 5A to 5C are schematic views illustrating operation processes of an iris unit;
Figure 6 is a sectional view illustrating a main part of a second exemplary embodiment of the present invention;
Figure 7 is a sectional view illustrating a main part of a third exemplary embodiment of the present invention; and
Figure 8 is a sectional view illustrating a main part of a fourth exemplary embodiment of the present invention.

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

### First exemplary embodiment

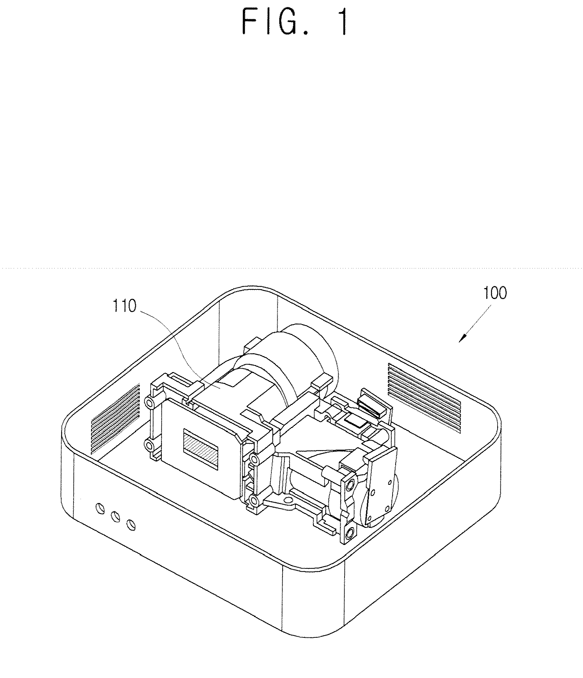

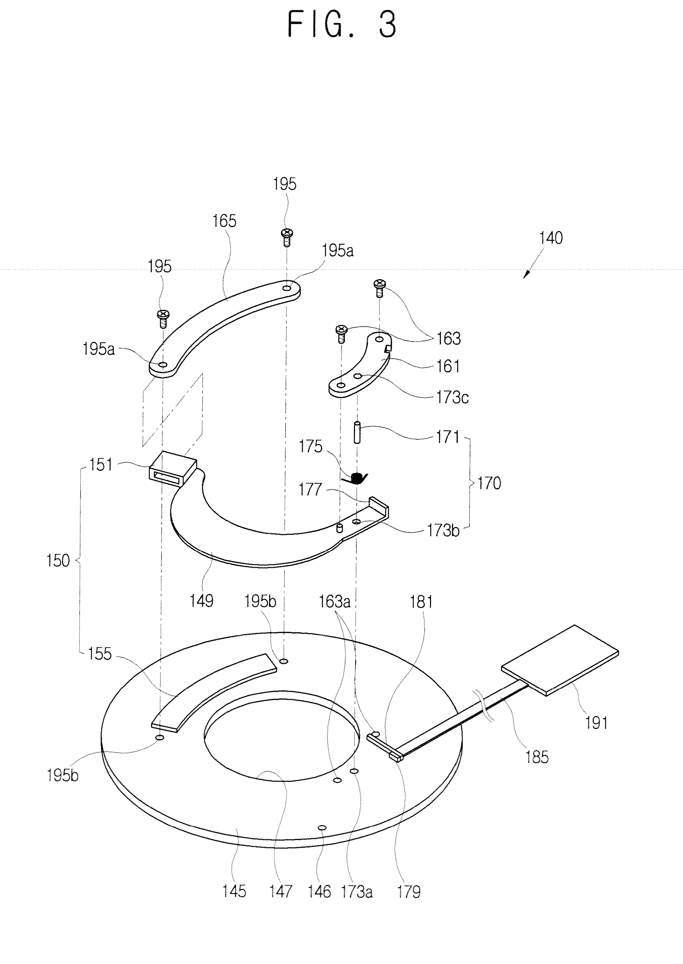

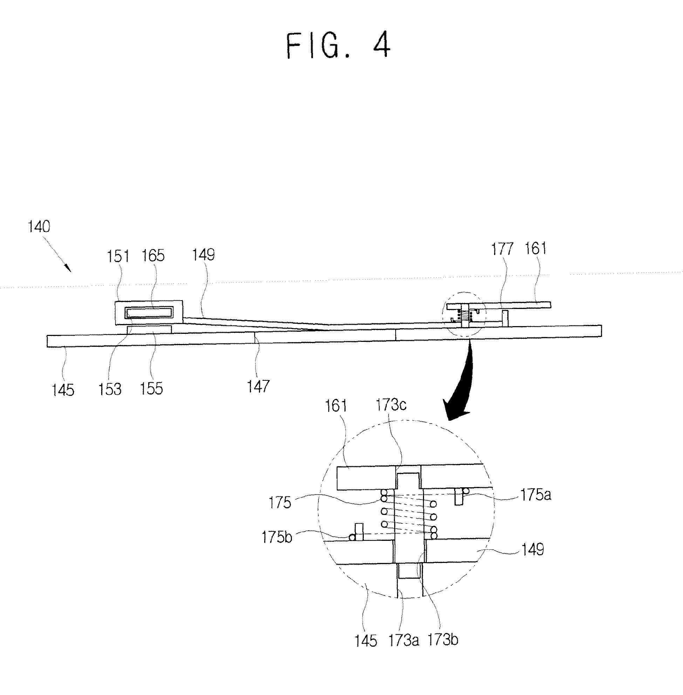

As shown in Figures 1 to 4, a display apparatus 100 according to a first exemplary embodiment of the present invention comprises an image projecting apparatus 110 including a light source part 115, an illuminating part 120 having a collecting tube part 126, a display element 129, and a projecting part 130 having a projecting tube part 135. The display apparatus 100 further comprises an iris unit 140 accommodated to one of the collecting tube part 126 and the projecting tube part 135.

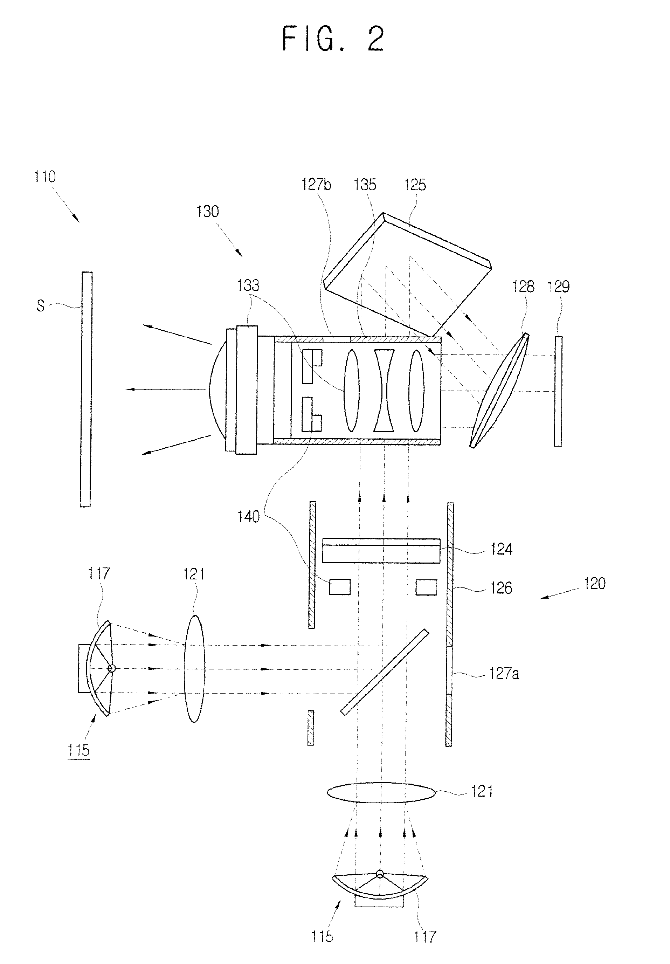

Referring to Figure 2, the light source part 115 may comprise a plurality of light emitting diodes (LEDs). The light source part 115 is respectively driven by light source boards (not shown). If the light source part 115 is provided as the LEDs, the LEDs may be provided in a plurality to respectively emit a red light, a green light and a blue light, and be respectively coupled to the light source boards supporting and driving the LEDs. A radiating plate (not shown) may be further provided to an edge part of the respective light source boards to radiate heat generated from the LEDs. Alternatively, the light source part 115 may comprise a discharge lamp of an arc type such as a mercury lamp, a metal halide lamp, and a xenon lamp instead of the LED. A reflecting plate 117 may be further provided to reflect light emitted from the light source part 115 as necessary.

The illuminating part 120 collects light emitted from the light source part 115, and includes a light collecting lens 121, a dichroic mirror (not shown), and a fly eye lens 124. The illuminating part 120 includes the collecting tube part 126 accommodating various lenses.

The light collecting lens 121 is disposed between the light source part 115 and the dichroic mirror to collect light emitted from the light source part 115 to parallel.

The dichroic mirror is disposed between the light source part 115 and a reflecting mirror 125 to selectively reflect or transmit light emitted from the light source part 115 depending on a wavelength of the light. For example, the dichroic mirror transmits a green light, and reflects a red light.

The fly eye lens 124 is disposed between the dichroic mirror and the reflecting mirror 125 to make brightness of light uniform so that an enlarged screen is obtained in a narrow place. Also, the fly eye lens 124 includes micro lenses respectively having rectangular sectional shapes.

The reflecting mirror 125 is disposed between the fly eye lens 124 and a field lens 128 to reflect light emitted from the light source part 115 to the field lens 128.

The collecting tube part 126 accommodates and supports the various lenses, and includes a signal line opening 127a through which a signal line 185 goes in and out. The collecting tube part 126 accommodates and supports a main disk body 145.

The field lens 128 is disposed between the reflecting mirror 125 and the display element 129 to irradiate light emitted from the light source part 115 to the display element 129 without loss.

The display element 129 uses light emitted from the light source part 115 to generate an image signal. Also, the display element 129 may include a DMD. The DMD uses light irradiated to a chip to which hundreds thousands of micro driving mirrors are integrated to generate the image signal. In the DMD, the hundreds thousands of micro driving mirrors switched on and off over five hundred thousand times per second respectively control a collected light in a digital type. Since the display apparatus 100 including the DMD projects light by controlling a light reflecting time by micro mirrors, a light efficiency is improved.

The projecting part 130 projects an image formed by the display element 129 on a screen S, and includes a plurality of projecting lenses 133. The projecting part 130 includes the projecting tube part 135 accommodating and supporting the projecting lens 133.

The projecting tube part 135 accommodates and supports the projecting lens 133, and includes a signal line opening 127b through which the signal line 185 passes. The projecting tube part 135 may accommodate and support the main disk body 145.

Tube part 126 and 135 refer to at least one of the collecting tube part 126 and the projecting tube part 135 below.

Referring to Figures 2 to 4, the iris unit 140 includes the main disk body 145, a shutter member 149, and a driving part 150. The iris unit 140 further includes a first bracket 161, a second bracket 165, a stopper 195, a hinge part 170, and an elastic member 175. The iris unit 140 further includes a magnetic sensor 179, a sub board 181 and a driving board 191. The iris unit 140 may be provided to at least one of the collecting tube part 126 and the projecting tube part 135.

The main disk body 145 has a planar slim shape, and includes a main opening 147 formed in a light path. The main disk body 145 has such a size as to be accommodated in at least one of the collecting tube part 126 and the projecting tube part 135. The main disk body 145 supports a first main magnet 155, the first bracket 161, the second bracket 165, the hinge part 170, the sub board 181 and the magnetic sensor 179. The main disk body 145 includes a disk coupling hole 146 formed through to be coupled with the tube part 126 and 135 by a screw (not shown), etc. The main disk body 145 is preferably but not necessarily coupled to a lens holder (not shown) disposed among the lenses to consider an image formed by the lenses, and support the lenses. The main disk body 145 includes a hinge pin hole 173a coupled with a hinge pin 171. In the main disk body 145, a stopper hole 195b is formed to a first side around the main opening 147 to which the stopper 195 is coupled, and a bracket bolt hole 163a is formed to a second side around the main opening 147 coupled with the first bracket 161. Accordingly, the main disk body 145 is accommodated in the tube part 126 and 135 to slim the image projecting apparatus 110.

The shutter member 149 is coupled to the hinge part 170 to rotate with respect to the main disk body 145 so that the shutter member 149 opens and closes the main opening 147. Other configuration may be interposed between the hinge part 170 and the main disk body 145. The shutter member 149 has such a size as to open and close the main opening 147. The shutter member 149 rotates between an opening position to open the main opening 147 and a closing position to close the main opening 147. A first coil 151 is coupled to a first end of the shutter member 149, and a sensor magnet 177 is coupled to a second end of the shutter member 149. The shutter member 149 is formed with a planar central area opening and closing the main opening 147. Accordingly, the shutter member 149 is coupled to the main disk body 145 to open and close the main opening 147 of the main disk body 145. The shutter member 149 may support a cable (not shown) supplying power from the sub board 181 to the first coil 151. The shutter member 149 is formed with a hinge pin hole 173b coupled to the hinge pin 171.

The driving part 150 includes the first coil 151 coupled to a first end part of the shutter member 149 to generate current by power supplied from the sub board 181, and the first main magnet 155 coupled to the main disk body 145 along a rotating direction of the first coil 151. Accordingly, an electromagnetic force is generated by current flowing through the first coil 151 and a magnetic field generated by the first main magnet 155 to be applied to the first coil 151 by Fleming's left hand rule. Here, the generated electromagnetic force is in proportion to the amount of current flowing through the first coil 151. Accordingly, the electromagnetic force applied to the first coil 151 rotates the shutter member 149 about the hinge part 170 so that the shutter member 149 opens and closes the main opening 147.

Accordingly, it is easy to control an opening or closing extent of the main opening 147 by rotating the shutter member 149 with varying the amount of current flowing through the first coil 151. Also, since a driving means such as a motor is unnecessary when the shutter member 149 opens and closes the main opening 147 to intercept the light path, noises can be prevented. Since the first coil 151 has a high response speed, speed with which the shutter member 149 opens and closes the main opening 147 can be improved. Also, since the opening and closing extent is easily controlled by the current variation, a contrast of an image displayed on the screen S can be controlled with increased number of steps.

A first coil through part 153 is provided to a central part of the first coil 151, and a coil winds around the first coil through part 153 in a direction to generate an electromagnetic force so that the shutter member 149 opens and closes the main opening 147 of the main disk body 145. Here, a coupling position of the first main magnet 155 can be changed according to a winding direction of the first coil 151. The second bracket 165 is inserted in the first coil through part 153 to guide rotation of the shutter member 149. The first coil 151 is coupled to the shutter member 149 to be distanced from the first main magnet 155.

The first bracket 161 is provided to a first side of the main opening 147, and is coupled with the hinge part 170 rotating the shutter member 149 with respect to the main disk body 145. The first bracket 161 has a planar shape, and is formed with a hinge pin hole 173c to which the hinge pin 171 is coupled. The first bracket 161 is coupled to the main disk body 145 by a bracket bolt 163. The first bracket 161 includes a first supporting part 175a supporting a side of the elastic member 175. The first bracket 161 may support the sub board 181.

The second bracket 165 is provided to a second side of the main opening 147, coupled to the main disk body 145, and inserted in the first coil through part 153 of the first coil 151 to guide motion of the shutter member 149. Stopper holes 195a to which the stoppers 195 are coupled are formed to the opposite ends of the second bracket 165. The second bracket 165 is preferably but not necessarily formed of material with such a strength as to maintain a constant distance from the first main magnet 155 along a lengthwise direction. Accordingly, the second bracket 165 prevents the shutter member 149 from sagging due to weight of the first coil 151, etc. when the shutter member 149 rotates between the opening position and the closing position, to thereby stably guide rotation of the first coil 151 and the shutter member 149.

The hinge part 170 is disposed between the first bracket 161 and the main disk body 145 to rotatably support the shutter member 149. The hinge part 170 includes the hinge pin 171, and the hinge pin holes 173a, 173b and 173c to which the hinge pin 171 is coupled.

The hinge pin 171 is disposed between the first bracket 161 and the main disk body 145 to be coupled to the hinge pin holes 173a, 173b and 173c of the first main disk body 145, the shutter member 149 and the first bracket 161. The hinge pin 171 is formed as a cylindrical rod. A bearing may be provided between the hinge pin 171 and the hinge pin hole 173b of the shutter member 149 so that the shutter member 149 smoothly rotates. Accordingly, the hinge pin 171 can rotatably support the shutter member 149.

The elastic member 175 is coupled to the hinge part 170 to elastically press the shutter member 149 toward the opening position. The elastic member 175 preferably but not necessarily comprises a coil spring as the first exemplary embodiment of the present invention. Alternatively, various springs may be selectively employed to the elastic member 175 as long as to elastically press the shutter member 149 toward the opening position. A first coil end part of the elastic member 175 is supported to the first supporting part 175a of the first bracket 161, and a second coil end part thereof is supported to a second supporting part 175b of the shutter member 149. The elastic member 175 may have an elastic force to elastically press the shutter member 149 toward the opening position without being considerably influenced by the electromagnetic force of the first coil 151. Accordingly, when power is not applied to the coil 151 so that current does not flow, the shutter member 149 can be moved to the opening position by the elastic member 175 because the electromagnetic force is not applied to the first coil 151.

The sensor magnet 177 is coupled to the shutter member 149 to allow the magnetic sensor 179 to sense the extent of opening and closing of the shutter member 149. As the first exemplary embodiment of the present invention, the sensor magnet 177 is positioned distantly from a position in which the first coil 151 is coupled to the shutter member 149. Alternatively, the sensor 177 may be disposed to various positions as long as to sense the extent of opening and closing of the shutter member 149.

The magnetic sensor 179 senses a magnetic flux variation of the sensor magnet 177 while the shutter member 149 rotates. The magnetic sensor 179 is preferably but not necessarily attached to the sub board 181 to sense the magnetic flux variation of the sensor magnet 177. Alternatively, the magnetic sensor 179 may be attached to the main disk body 145.

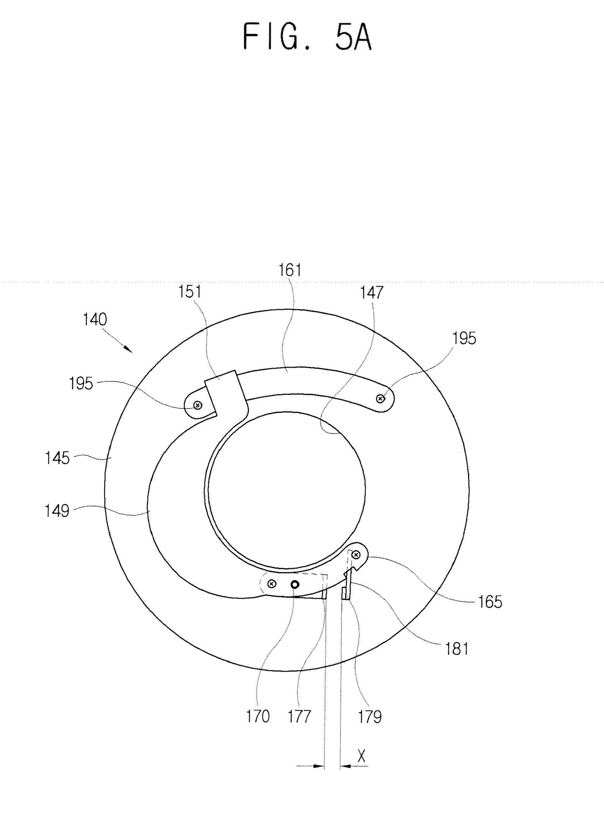

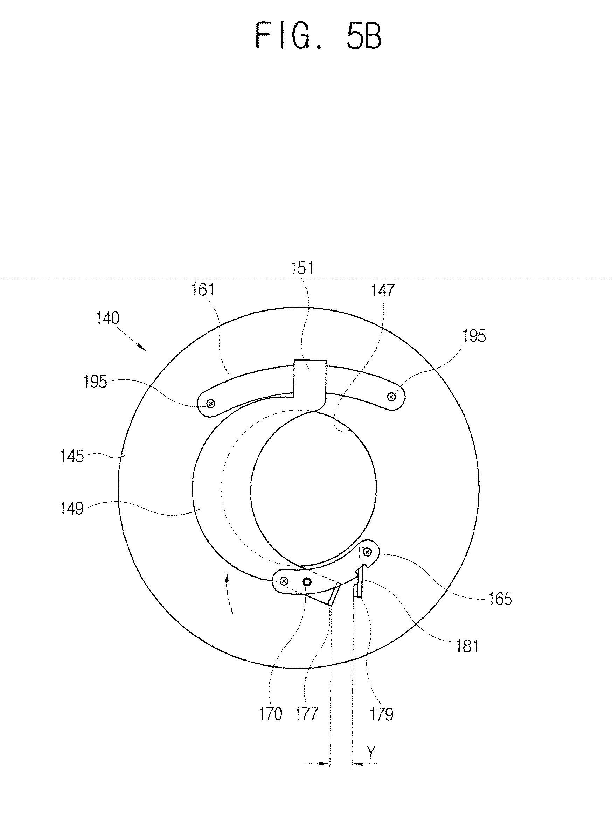

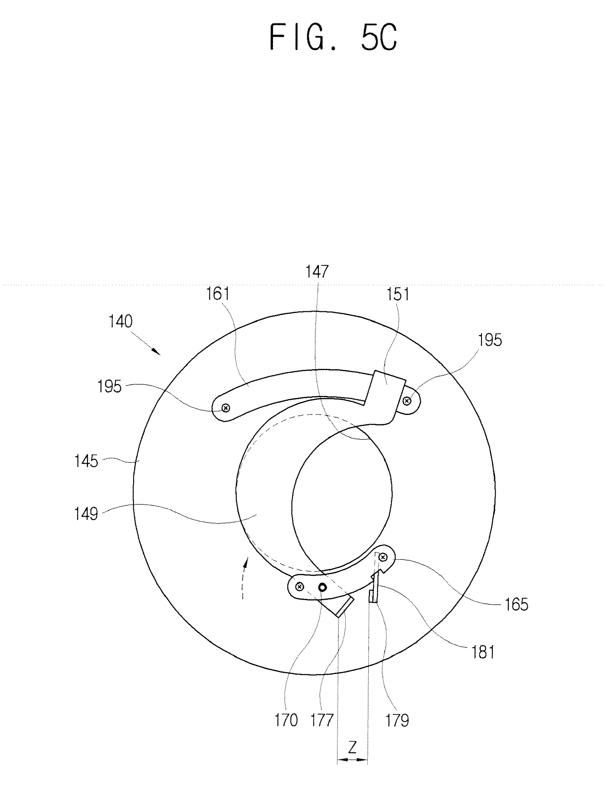

A sensing process of a magnetic flux variation of the sensor magnet 177 by means of the magnetic sensor 179 will be described by referring to Figures 5A to 5C. At the opening position as shown in Figure 5A, a distance from the sensor magnet 177 to the magnetic sensor 179 becomes a minimum 'X'. At the closing position as shown in Figure 5C, a distance from the sensor magnet 177 to the magnetic sensor 179 becomes a maximum 'Z'. Here, referring to Figure 5B, it is assumed that distance from the sensor magnet 177 to the magnetic sensor 179 is 'Y' when the shutter member 149 rotates. Accordingly, a control part (not shown) can calculate to what extent the shutter member 149 closes the main opening 147 by sensing a magnetic flux variation according to a distance variation between the sensor magnet 177 and the magnetic sensor 179. Accordingly, the shutter member 149 can be easily controlled.

The sub board 181 drives the magnetic sensor 179 and the first coil 151. The sub board 181 is coupled to the main disk body 145 to be electrically connected with the driving board 191 provided to an outside of the tube parts 126 and 135 through the signal line 185.

The signal line 185 electrically connects the driving board 191 and the sub board 181. The signal line 185 preferably but not necessarily comprises an flexible printed circuit board (FPC) formed of material with such a flexibility as to penetrate the signal through holes 127a and 127b such as polyester or polyimide.

The driving board 191 is provided outside of the tube parts 126 and 135, and is electrically connected to the sub board 181 by the signal line 185.

The stopper 195 is provided to the opposite end parts of the second bracket 165 to restrict rotation of the shutter member 149 when the shutter member 149 opens and closes the main opening 147. The stopper 195 is coupled to the stopper hole 195b of the main disk body 145 to support the second bracket 165.

Hereinafter, an operating process of the display apparatus 100 according to the first exemplary embodiment of the present invention will be described by referring to Figures 2 and 5A to 5C.

At first, a process in which an image is displayed on the screen S will be described.

Each light source board drives the light source part 115 such as an LED or a mercury lamp to emit light. A part of light emitted from the light source part 115 may be reflected to the light collecting lens 121 by the reflecting plate 117. Accordingly, the parallel emitted light is collected in the light collecting lens 121, and the light is selectively transmitted or reflected depending on wavelength of the light in the dichroic mirror. Also, the light has a uniform brightness by means of the fly eye lens 124, and is reflected by the reflecting mirror 125 to reach the display element 129 through the field lens 128. The iris unit 140 may be accommodated among the lenses of the collecting tube part 126 in the light path. The display element 60 enlarges and projects the received light on the screen S through the projecting lens 133. The iris unit 140 may be provided between the projecting lens 133 of the projecting tube part 135 directing from the display element 129 toward the screen S.

Then, a driving process of the iris unit 140 will be described.

Referring to Figure 5A, the shutter member 149 is positioned at the opening position to be adjacent to the left stopper 195.

Referring to Figure 5B, when a predetermined power is supplied to the driving board 191, current is transmitted to the first coil 151 through the signal line 185, the sub board 181, and a connecting means (not shown) such as a cable connecting the sub board 181 and the first coil 151. An electromagnetic force generated by current flowing through the first coil 151 and a magnetic force generated in the first main magnet 155 is applied to the first coil 151, and the electromagnetic force moves the first coil 151 rightward. The amount of movement of the first coil 151 is in proportion to the amount of current flowing through the first coil 151. Accordingly, the second bracket 165 guides the first coil 151 to move rightward, and the central area of the shutter member 149 can intercept the light path of the main opening 147. Here, the control part calculates to what extent the shutter member 149 intercepts the main opening 147 depending on a position result of the sensor magnet 177 sensed by the magnetic sensor 179, and accordingly, can control the amount of current flowing through the first coil 151.

Referring to Figure 5C, if the driving board 191 increases the amount of current flowing through the first coil 151, the electromagnetic force applied to the first coil 151 increases so that the first coil 151 further moves rightward to reach the closing position to be adjacent to the stopper 195. Here, although the electromagnetic force increases, the first coil 151 is prevented from exceeding the closing position by the stopper 195.

When the driving board 191 does not supplies power to the first coil 151, current does not flow through the first coil 151 so that the first coil 151 moves to the opening position by the elastic member 175.

Accordingly, in the display apparatus 100 according to the first exemplary embodiment of the present invention, the shutter member 149 opens and closes the main opening 147 by means of the first main magnet 155 and the first coil 151, thereby preventing noises, and improving a rotating respond speed of the shutter member 149. Also, the opening or closing extent of the main opening 147 with the shutter member 149 can be precisely controlled by adjusting current supplied to the first coil 151. For example, the opening and closing degree is controlled so that the shutter member 149 may open and close the main opening by 256 steps, thereby enhancing brightness of an image displayed on the screen S. Accordingly, a contrast range of an image displayed on the screen S can be widened, thereby improving reliability of a product. Also, the iris unit 140 is accommodated in the tube part 126 and 135, to thereby slim a product and simplify a configuration of a product and a manufacturing process thereof, thereby reducing an economic cost.

### Second exemplary embodiment

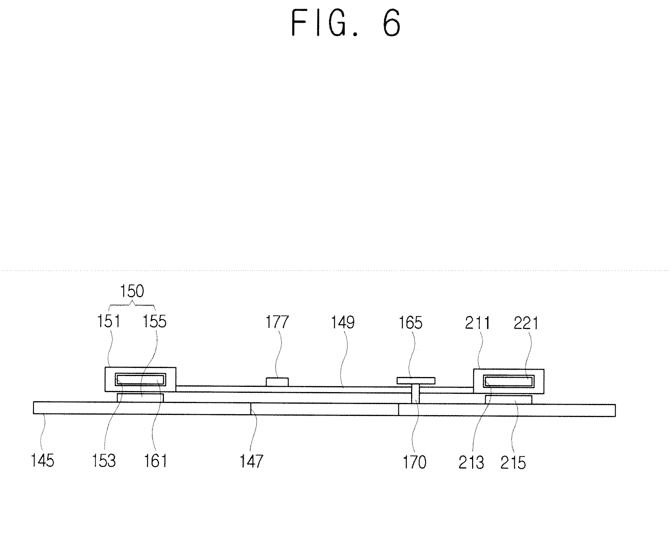

Figure 6 is a sectional view of an iris unit 140 of a display device 100 according to a second exemplary embodiment of the present invention. As shown therein, compared with the display device according to the first exemplary embodiment, the display device 100 according to a second exemplary embodiment further includes a driving part 150 allowing a shutter member 149 to rotate. The iris unit 140 according to the second exemplary embodiment of the present invention further includes a second coil 211, a second main magnet 215, a second coil through part 213 and a third bracket 221.

When the second coil 211 is supplied with power through a driving board 191, an electromagnetic force is generated by current flowing through the second coil 211 and a magnetic field generated in the second main magnet 215 to be applied to the second coil 211. Here, the electromagnetic force is applied to the second coil 211 to rotate the shutter member 149 in the same direction as an electromagnetic force applied to a first coil 151. The second coil through part 213 is formed to a central part of the second coil 211, and the third bracket 221 is inserted in the second coil through part 213. The amount of current supplied to the second coil 211 may be adjusted by considering the amount of current supplied to the first coil 151, a respond speed of the shutter member 149, an opening and closing extent of a main opening 147.

The second main magnet 215 is coupled to a main disk body 145 to be distanced from the second coil 211 along a rotating direction of the second coil 211.

The third bracket 221 is provided to a side of the main opening 147 to be adjacent to a first bracket 161, and is coupled to the main disk body 145. The third bracket 221 is inserted in the second coil through part 213 of the second coil 211 to guide motion of the shutter member 149 together with the first bracket 161. A component such as a stopper 195 may be provided to the opposite end parts of the third bracket 221 to restrict rotation of the shutter member 149 like a second bracket 165.

Different from the first exemplary embodiment, the second bracket 165 according to the second exemplary embodiment may have various shapes and positions to support a hinge part 170 without interfering with the third bracket 221.

Also, compared with the first exemplary embodiment, a sensor magnet 177 according to the second exemplary embodiment may be coupled to a different part of the shutter member 149 to sense an opening and closing extent of the shutter member 149. For example, the sensor magnet 177 may be disposed to a side between a hinge part 170 and the first coil 151. Here, a magnetic sensor 179 is coupled to a part of the main disk body 145 to correspond to the sensor magnet 177.

Also, current may be supplied to one of the first coil 151 and the second coil 211. The amount and time of current supplied to the first coil 151 and the second coil 211 may differ as necessary.

With this configuration, the opposite sides of the shutter member 149 of the iris unit 140 according to the second exemplary embodiment of the present invention are guided by the second bracket 165 and the third bracket 221 so that the shutter member 149 stably rotates. Also, since the driving part 150 is provided to the opposite sides to increase the amount of a flowing current, to thereby enlarge the electromagnetic force, a response speed of the shutter member 149 can be further improved.

### Third exemplary embodiment

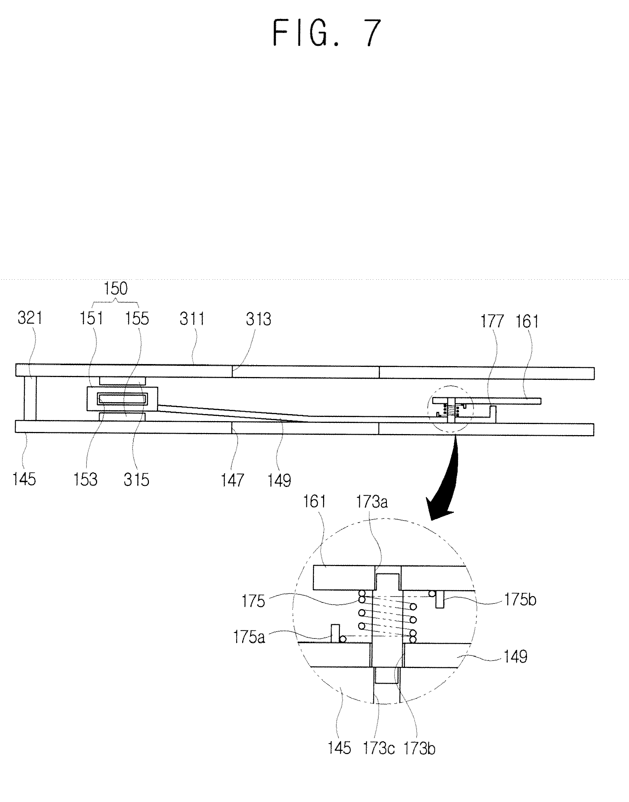

Figure 7 is a sectional view of an iris unit 140 of a display device 100 according to a third exemplary embodiment of the present invention. As shown therein, compared with the display device according to the first exemplary embodiment, the display device 100 according to a third exemplary embodiment further includes a sub disk body 311, and a first sub magnet 315.

The sub disk body 311 is accommodated in a tube part 126 and 135, and faces a main disk body 145 to interpose a shutter member 149 therebetween. The first sub magnet 315 is coupled to the sub disk body 311. The sub disk body 311 includes a sub opening 313. The sub opening 313 may have the same size as a main opening 147, but may have a different size from the main opening 147 as necessary. The sub opening 313 may be disposed in rear of the main opening 147 in a light advancing path, but may be disposed in front of the main opening 147 as necessary. The sub disk body 311 may further include a coupling bolt 321 coupled with the main disk body 145.

The first sub magnet 315 is coupled to the sub disk body 311 to face a first main magnet 155 to interpose a first coil 151 therebetween. Distance between the first sub magnet 315 and the first coil 151 is preferably but not necessarily the same as distance between the first main magnet 155 and the first coil 151.

Here, a first bracket 161 and a second bracket 165 may be coupled to the sub disk body 311.

With this configuration, a magnetic field generated in the shutter member 149 of the iris unit 140 according to the third exemplary embodiment of the present invention increases to enlarge an electromagnetic force applied to the first coil 151. Accordingly, a response speed of the shutter member 149 can be improved.

### Fourth exemplary embodiment

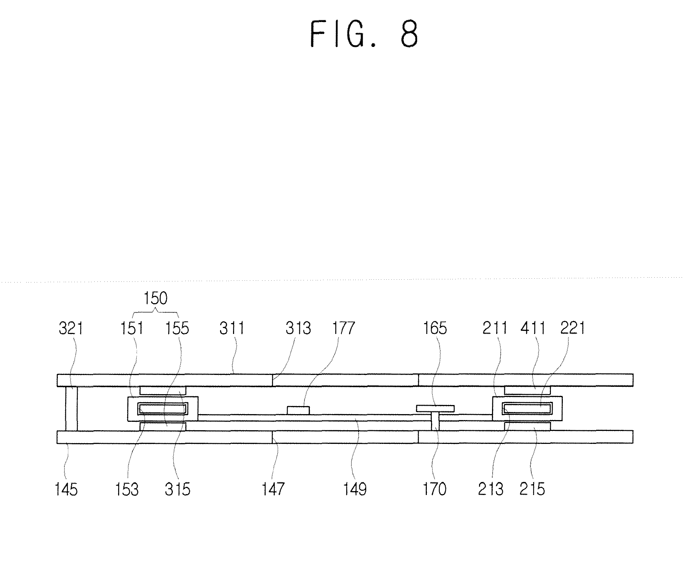

Figure 8 is a sectional view of an iris unit 140 of a display device 100 according to a fourth exemplary embodiment of the present invention. As shown therein, compared with the display device according to the second exemplary embodiment, a display device 100 according to a fourth exemplary embodiment further includes a sub disk body 311, a first sub magnet 315 and a second sub magnet 411.

The second sub magnet 411 is coupled to the sub disk body 311 to face a second main magnet 215 to interpose a second coil 211 therebetween. Distance between the second sub magnet 411 and the second coil 211 is preferably but not necessarily the same as distance between the second main magnet 215 and the second coil 211.

Here, as necessary, one of the first sub magnet 315 and the second sub magnet 411 may be unnecessary.

With this configuration, a magnetic field generated in a shutter member 149 of the iris unit 140 according to the fourth exemplary embodiment of the present invention increases to enlarge an electromagnetic force applied to a first coil 151. Accordingly, a response speed of the shutter member 149 can be improved.

The display apparatus according to the present invention comprises a projector of a front projecting type projecting an image in front of a screen, and a projection television of a rear projecting type projecting an image behind a screen.

Also, the display apparatus according to the present invention comprises a display element of a single plate type, and a display element of a multi plate type.

As described above, according to the present invention, a configuration can be simplified to be slimmed, noises can be prevented, and a response speed can be improved.

Also, since an opening and closing extent of a main opening is precisely controlled by a plurality of steps, a brightness control of an image can be improved, thereby improving reliability of a product.

Also, a configuration can be simplified, and a manufacturing process thereof can be simplified, thereby economically reducing a cost.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
a tube part (126,135); and
an iris unit (140) comprising a main disk body (145) which is accommodated in the tube part (126,135) and the main disk body (145) comprising a main opening (147) formed in a light path, a shutter member (149) rotatably coupled with respect to the main disk body (145) to open and close the main opening (147), and a driving part (150) which generates an electromagnetic force to rotate the shutter member (149).

2. The display apparatus according to claim 1, wherein the driving part (150) comprises:
a first coil (151) which is coupled to a first side of the shutter member (149), and receives power so that current flows therethrough, and
a first main magnet (155) which is coupled to the main disk body (145) in a rotating direction of the first coil (151).

3. The display apparatus according to claim 2, wherein the iris unit (140) further comprises:
a first bracket (161) which is provided to a first side of the main opening (147) to rotatably support the shutter member (149) with respect to the main disk body (145), and
a second bracket (165) which is provided to a second side of the main opening (147) and coupled to the main disk body (145) to guide rotation of the first coil (151).

4. The display apparatus according to claim 3, wherein the iris unit (140) further comprises a hinge part (170) which is provided between the first bracket (161) and the main disk body (145) to rotatably support the shutter member (149).

5. The display apparatus according to claim 4, wherein the shutter member (149) rotates between an opening position in which the shutter member (149) opens the main opening (147), and a closing position in which the shutter member (149) closes the main opening (147); and
the display apparatus further comprises an elastic member (175) which is coupled to the hinge part (170) to elastically press the shutter member (149) toward the opening position.

6. The display apparatus according to any preceding claim, wherein the iris unit (140) further comprises a sensor magnet (177) which is coupled to an area of the shutter member (149), and a magnetic sensor (179) which senses a magnetic flux variation of the sensor magnet (177) according to rotation of the shutter member (149).

7. The display apparatus according to claim 6, wherein the iris unit (140) further comprises a sub board (181) which drives the magnetic sensor (179) and the driving part (150).

8. The display apparatus according to claim 7, wherein the iris unit (104) further comprises:
a signal line (185) which is electrically connected with the sub board (181) through a signal line (185) opening formed on the tube part (126,135), and
a driving board (191) which is provided to an outside of the tube part (126,135) to be electrically connected with the sub board (181) by the signal line (185).

9. The display apparatus according to any of claims 3 to 8, wherein the first coil (151) comprises a first coil through part (153) which is formed in a central part of the first coil (151), and the second bracket (165) is accommodated in the first coil (151) through part to guide rotation of the shutter member (149).

10. The display apparatus according to any of claims 3 to 9, wherein the iris unit (140) further comprises a stopper (195) which is provided to opposite sides of the second bracket (165) to restrict rotation of the shutter member (149) when the shutter member (149) opens and closes the main opening (147).

11. The display apparatus according to claim 10, wherein the stopper (195) is coupled to the main disk body (145) to support the second bracket (165).

12. The display apparatus according to any of claims 2 to 11, further comprising a sub disk body (311) which is accommodated in the tube part (126,135) to face the main disk body (145) to interpose the shutter member (149) therebetween, and a first sub magnet (315) which faces the first main magnet (155) to interpose the first coil (151) therebetween.

13. The display apparatus according to any of claims 3 to 11, wherein the driving part (150) comprises:
a second coil (211) which is coupled to a second side of the shutter member (149) to face the first coil (151), and receives power so that current flows therethrough, and
a second main magnet (215) which is coupled to the main disk body (145) in a rotating direction of the second coil (211).

14. The display apparatus according to claim 13, further comprising a sub disk body (311) which is accommodated in the tube part (126,135) to face the main disk body (145) to interpose the shutter member (149) therebetween,
wherein at least one of a first sub magnet (315) which is coupled to the sub disk body (311) in a rotating direction of the first coil (151) to supply an electromagnetic force to the first coil (151), and a second sub magnet (411) which is coupled to the sub disk body (311) to face the second main magnet (215) to interpose the second coil (211) therebetween is coupled to the sub disk body (311).

15. The display apparatus according to claim 13, wherein the second coil (211) comprises a second coil through part (213) formed in a central part of the second coil (211), and
the second bracket (165) is inserted in the second coil (211) through part to guide rotation of the shutter member (149).

16. The display apparatus according to any preceding claim, further comprising a light source part (115), an illuminating part (120) which collects light emitted from the light source part (115), a display element (129) which forms an image out of light transmitted through the illuminating part (120), and a projecting part (130) which projects the image formed by the display element (129) on a screen,
wherein the tube part (126,135) comprises a collecting tube part (126) which is provided to the illuminating part (120), and a projecting tube part (135) which is provided to the projecting part (130).

17. The display apparatus according to claim 16, wherein the main disk body (145) is accommodated in at least one of the collecting tube part (126) and the projecting tube part (135).

18. An image projecting apparatus, comprising:
a tube part (126,135); and
an iris unit (140) comprising a main disk body (145) which is accommodated in the tube part (126,135), and the main disk body (145) comprising a main opening (147) formed in a light path, a shutter member (149) which is rotatably coupled with respect to the main disk body (145) to open and close the main opening (147), and a driving part (150) which generates an electromagnetic force to rotate the shutter member (149).

19. The image projecting apparatus according to claim 18, wherein the driving part (150) comprises:
a first coil (151) which is coupled to a first side of the shutter member (149), and which receives power so that current flows therethrough, and
a first main magnet (155) which is coupled to the main disk body (145) in a rotating direction of the first coil (151).

20. The image projecting apparatus according to claim 19, wherein the iris unit (140) further comprises:
a sensor magnet (177) which is coupled to an area of the shutter member (149),
a magnetic sensor (179) which senses a magnetic flux variation of the sensor magnet (177) according to rotation of the shutter member (149), and
a sub board (181) which drives the magnetic sensor (179) and the driving part (150).

21. The image projecting apparatus according to claim 19 or 20, further comprising a sub disk body (311) which is accommodated in the tube part (126,135) to face the main disk body (145) to interpose the shutter member (149) therebetween, and a first sub magnet (315) which faces the first main magnet (155) to interpose the first coil (151) therebetween.

22. The image projecting apparatus according to claim 19, 20 or 21 wherein the driving part (150) comprises:
a second coil (211) which is coupled to a second side of the shutter member (149) to face the first coil (151), and receives power so that current flows therethrough, and
a second main magnet (215) which is coupled to the main disk body (145) in a rotating direction of the second coil (211).

23. The image projecting apparatus according to any of claims 19 to 22, further comprising a sub disk body (311) which is accommodated in the tube part (126,135) to face the main disk body (145) to interpose the shutter member (149) therebetween,
wherein at least one of a first sub magnet (315) which is coupled to the sub disk body (311) in a rotating direction of the first coil (151) to supply an electromagnetic force to the first coil (151), and a second sub magnet (411) which is coupled to the sub disk body (311) to face the second main magnet (215) to interpose the second coil (211) therebetween is coupled to the sub disk body (311).

24. An iris unit (140) for a display apparatus comprising a tube part (126,135), comprising:
a main disk body (145) which is accommodated in the tube part (126,135), and the main disk body (145) comprising a main opening (147) formed in a light path;
a shutter member (149) which is rotatably coupled with respect to the main disk body (145) to open and close an opening of the main disk body (145); and
a driving part (150) which generates an electromagnetic force to rotate the shutter member (149).

25. The iris unit (140) according to claim 24, wherein the driving part (150) comprises:
a first coil (151) which is coupled to a first side of the shutter member (149), and receives power so that current flows therethrough, and
a first main magnet (155) which is coupled to the main disk body (145) in a rotating direction of the first coil (151) .

26. The iris unit (140) according to claim 25, further comprising a first bracket (161) which is provided to a first side of the main opening (147) to rotatably support the shutter member (149) with respect to the main disk body (145), a second bracket (165) which is provided to a second side of the main opening (147) and coupled to the main disk body (145) to guide rotation of the first coil (151), and a hinge part (170) which is provided between the first bracket (161) and the main disk body (145) to rotatably support the shutter member (149),
wherein the shutter member (149) rotates between an opening position in which the shutter member (149) opens the main opening (147), and a closing position in which the shutter member (149) closes the main opening (147).

27. The iris unit (140) according to claim 24, 25 or 26, further comprising:
a sensor magnet (177) which is coupled to an area of the shutter member (149),
a magnetic sensor (179) which senses a magnetic flux variation of the sensor magnet (177) according to rotation of the shutter member (149), and
a sub board (181) which drives the magnetic sensor (179) and the driving part (150).

28. The iris unit (140) according to claim 25, 26 or 27, further comprising a sub disk body (311) which is accommodated in the tube part (126,135) to face the main disk body (145) to interpose the shutter member (149) therebetween, and a first sub magnet (315) which faces the first main magnet (155) to interpose the first coil (151) therebetween.

29. The iris unit (140) according to any of claims 25 to 28, wherein the driving part (150) further comprises:
a second coil (211) which is coupled to a second side of the shutter member (149) to face the first coil (151), and receives power so that current flows therethrough, and
a second main magnet (215) which is coupled to the main disk body (145) in a rotating direction of the second coil (211).

30. The iris unit (140) according to claim 29, further comprising a sub disk body (311) which is accommodated in the tube part (126,135) to face the main disk body (145) to interpose the shutter member (149) therebetween,
wherein at least one of a first sub magnet (315) which is coupled to the sub disk body (311) in a rotating direction of the first coil (151) to supply an electromagnetic force to the first coil (151), and a second sub magnet (411) which is coupled to the sub disk body (311) to face the second main magnet (215) to interpose the second coil (211) therebetween is coupled to the sub disk body (311).
